# EUROPEAN PATENT SPECIFICATION

(11) **EP 2 921 319 B1**
(45) Date of publication and mention of the grant of the patent: **26.10.2016**
(21) Application number: 15159531.1
(22) Date of filing: 17.03.2015
(51) Int. Cl.: B60B 27/00, B60C 23/00

(54) **Wheel hub adapted to control a pressure of one respective tyre**
Zur Steuerung des Drucks des jeweiligen Reifens angepasste Radnabe
Moyeu de roue conçu pour contrôler la pression d'un pneumatique correspondant

(30) Priority: 17.03.2014 IT MI20140432
(43) Date of publication of application: 23.09.2015
(73) Proprietor: FPT Industrial S.p.A., 10156 Torino (IT)
(72) Inventor: Muzio, Davide, 10015 Ivrea (IT); Rossia, Giorgio, 10141 Torino (IT)
(74) Representative: Franzolin, Luigi

(56) References cited:
- EP-A1- 0 410 723
- WO-A1-03/106207
- US-A- 4 434 833

## Description

The present invention refers to the field of wheel hubs, in particular of the type adapted to control a pressure of one respective tyre or pair of tyres of twin wheels.

It is difficult to make a channel that allows control of the pressure of a tyre in rotary movement via the relative stub axle, which forms part of the wheel hub. The spindle can be fixed or jointed in the case of steering wheels.

WO03106207 discloses a hub drive system comprising means for controlling inflation of the tyre on the wheel rim connected to the hub. WO03106207 discloses the features of the preamble of claim 1.

Therefore the object of the present invention is to indicate a wheel hub adapted to control a pressure of one respective tyre which is simple to produce and less invasive with respect to the wheel hub components.

The subject of the present invention is a wheel hub adapted to control a pressure of one respective tyre.

The attached claims form an integral part of the present description.

Further objects and advantages of the present invention will become clear from the following detailed description of an embodiment example of the same (and variations thereof) and from the accompanying drawings provided purely by way of nonlimiting example, wherein:

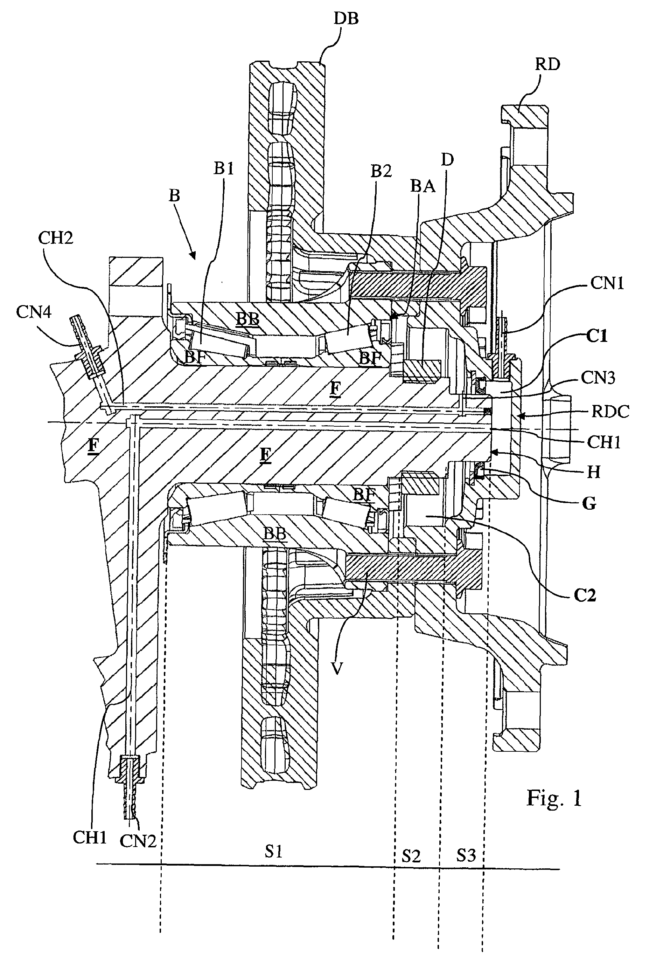

figure 1 shows an embodiment example of the hub subject of the present invention according to a longitudinal view obtained by intersection with a vertical plane.

The same reference numbers and the same reference letters in the figures identify the same elements or components.

In the context of the present description, the term "second" does not imply the presence of a "first" component. Said terms are used only for clarity and should not be interpreted in a limiting sense.

The spindle F has a longitudinal shape and is preferably tapered towards the outside, namely from left to right of the drawing.

On the left side, namely on the connection part to a body of a vehicle, the spindle is provided with connection elements with oscillating arms and lever mechanisms generally present and known per se, including oscillating arms or rigid axle bodies, or rigid steering bodies.

The spindle F preferably defines at least three sections S1, S2 and S3, numbered from left to right.

On the first section S1 a bearing B is keyed, preferably of the double-row type, namely having a pair of opposed conical bearings (B1, B2).
It has a fixed part BF with the spindle and a part BB, rotatably associated to the fixed part.
The fixed part BF of the bearing B is secured to the spindle F by means of a nut or ring nut D adapted to thread on a second section S2 of the spindle F.
The bearing D defines an at least partially flat face BA on which the brake disc DB and the wheel disc WD are fitted. The rim of a vehicular wheel (not shown) will be connected to the latter.
In particular, when the hub is assembled, the brake disc DB is interposed between the bearing B and the wheel disc RD.

The brake disc DB defines, by means of the section of figure 1, an Omega, which preferably engages at least partially on the rotating part of the bearing B, while the wheel disc RD defines a W.

The brake disc DB and the wheel disc RD are associated shoulder to shoulder so that the respective cavities are opposed.

Connection means V are used to simultaneously fix the wheel disc and the brake disc to the rotating part BB of the bearing.

According to the present invention, the spindle F defines a third section S1 which protrudes towards the wheel disc.

The corresponding central portion RDC of the wheel disc engages on said section S3 defining a rotating chamber C1 rotating between the head H of the spindle and the central part RDC of the wheel disc.

Due to the fact that said rotating chamber is also defined by the head of the stub axle, said rotating chamber C is defined as "head chamber".

The central part RDC of the wheel disc defines a sort of hood for the section S3 of the spindle F.

A gasket G is annularly interposed between the section S3 and the central part RDC of the wheel disc. An appropriate seat for said gasket G can be provided both in the annular portion of the wheel disc RD which fits onto the stub axle, and/or on the portion S3 of the spindle F which engages in the central part RDC of the wheel disc RD.

Said head chamber is therefore sealed towards the external environment.

A channel CH1 crosses the spindle and, with a first end CN1, flows into said head chamber C1. A relative second end with relative connector CN2 will be pneumatically connected to a compressed air source (not shown).

In the central portion RDC of the wheel disc RD an opening is made with relative connector CN1 which allows the pneumatic connection of the head chamber C to the valve of a respective tyre not shown.

On the opposite side, the channel CH1 flows into a connector CN2 for connection to a controllable compressed air source.

According to a preferred variation of the invention, at any point of the pneumatic connection between the opening with relative connector CN1 and the tyre, a mechanical valve is arranged whose opening and closing can be controlled by means of pressure pulses, so as to allow the opening thereof for both inflation and deflation of the respective tyre.

From examination of figure 1 it can be noted that an annular volume C2 is defined between the nut/ring nut D, the wheel disc RD and the face BA of the bearing B. Also in this case it is a rotating chamber, which is defined for convenience as "annular chamber" C2.

Said annular chamber C2 is adjacent to the head chamber C1 through said gasket G.

Any pressure loss of the head chamber C1 could pressurize the annular chamber C2 with possible expulsion of the grease contained in the bearing B.

To avoid this problem, it is preferable for said annular chamber C2 to open towards the outside, for example through a radial opening made in the wheel disc RD and/or in the brake disc DB.

According to the preferred variation shown in figure 1, it is preferable for the opening towards the outside of the annular chamber C2 to be made through the spindle F, by means of a second channel CH2 which has a first end CN3 that flows into the annular chamber C2 and a second end CN4 that terminates far from the brake disc DB.

In this way, advantageously, the connector CN4 is distanced from the brake disc DB which is known to create a dirty environment due to the abrasion dust of the pads (not shown) and of the brake disc.

According to a preferred variation of the present invention, the connector CN4 connects the second channel CH2 to the external environment through a pressure sensor able to monitor the pressure losses of the head chamber which consequently affect the pressure of the annular chamber.

The spindle F can also be a jointed spindle for the steering wheels of a vehicle or a fixed spindle supporting one or more wheels.

## Claims

1. Wheel hub adapted to control a pressure of at least one respective tyre comprising
- a spindle (F) having a longitudinal shape, on which
- a bearing (B) is keyed having a fixed part (BF) with the spindle and a rotating part, rotatably associated to the fixed part (BF),
- a wheel disc (RD) adapted to be connected to a vehicular wheel, the disc being associated to said rotating part (BB) of said bearing,
wherein said spindle(F) comprises an end portion (S3),
the wheel hub being **characterized in** comprising a central part (RDC) of said wheel disc (RD) adapted to be engaged on said end portion (S3) of the spindle (F) and a gasket (G) annularly interposed between said end portion (S3) and said central part (RDC) to define a sealed head rotating chamber (C1) and wherein said spindle (F) comprises a first channel (CH1) having a first end flowing into said head rotating chamber (C1) and a second end (CN2) adapted to be pneumatically connected to a source of compressed air and wherein said central part (RDC) comprises a first opening (CN1) adapted to be pneumatically connected to a valve of said at least one tyre.

2. Device according to claim 1, wherein a threaded nut (D) is screwed on said spindle (F) to block said fixed part (BF) of said bearing (B) on the spindle (F) and wherein
- said wheel disc (RD),
- said nut (D) and
- said bearing (B)
define an annular rotating chamber (C2) adjacent to said head rotating chamber (C) through said gasket (G).

3. Device according to claim 2, further comprising a brake disc (DB) which, when the hub is assembled, is interposed between the bearing (B) and the wheel disc (RD).

4. Device according to one of the claims 2 or 3, wherein said annular rotating chamber (CH2) comprises a second opening towards the environment.

5. Device according to claim 4, wherein said second opening comprises a radial channel through said wheel disc and/or said brake disc.

6. Device according to claim 4, wherein said opening comprises a second channel (CH2), made through said spindle (F) and having a first end (CN3) flowing into said annular chamber (CH2) and a second end (CN4) flowing into the environment.

7. Device according to any one of the preceding claims, wherein said bearing (B) is of the double-row type, namely having a pair of opposed conical bearings (B1, B2).

8. System for controlling the pressure of a tyre of a vehicular wheel associated to a wheel hub according to any one of the claims from 1 to 7, wherein between said first opening (CN1) and said tyre a mechanical valve is interposed whose opening and closing can be controlled by means of pressure pulses controlled by means of said compressed air source.

9. Terrestrial vehicle equipped with at least one wheel hub according to any one of the claims from 1 to 7 or with a system for controlling the pressure of a tyre of a vehicular wheel according to claim 8.

## Patentansprüche

1. Radnabe, die dafür ausgelegt ist, den Druck wenigstens eines entsprechenden Reifens zu steuern, die Folgendes umfasst:
- eine Spindel (F) mit einer länglichen Form, an der
- ein Lager (B) verkeilt ist, das einen an der Spindel befestigten Teil (BF) und einen drehenden Teil, der dem festen Teil (BF) zugeordnet ist, besitzt,
- eine Radscheibe (RD), die dafür ausgelegt ist, mit einem Fahrzeugrad verbunden zu werden, wobei die Scheibe dem drehenden Teil (BB) des Lagers zugeordnet ist,
wobei die Spindel (F) einen Endabschnitt (S3) aufweist,
wobei die Radnabe **gekennzeichnet ist durch** einen Mittelteil (RDC) der Radscheibe (RD), der dafür ausgelegt ist, an dem Endabschnitt (S3) der Spindel (F) in Eingriff zu gelangen, und eine Dichtung (G), die zwischen den Endabschnitt (S3) und den Mittelteil (RDC) ringförmig eingefügt ist, um eine dichte Kopfdrehkammer (C1) zu definieren, wobei die Spindel (F) einen ersten Kanal (CH1) aufweist, wovon ein erstes Ende mit der Kopfdrehkammer (C1) strömungstechnisch verbunden ist und ein zweites Ende (CN2) dafür ausgelegt ist, mit einer Druckluftquelle drucklufttechnisch verbunden ist, wobei der Mittelteil (RDC) eine erste Öffnung (CN1) umfasst, die dafür ausgelegt ist, mit einem Ventil des wenigstens einen Reifens drucklufttechnisch verbunden zu werden.

2. Vorrichtung nach Anspruch 1, wobei auf die Spindel (F) eine Gewindemutter (D) geschraubt ist, um den festen Teil (BF) des Lagers (B) an der Spindel (F) zu blockieren und wobei
- die Radscheibe (RD),
- die Mutter (D) und
- das Lager (B)
durch die Dichtung (G) eine ringförmige Drehkammer (C2) in der Nähe der Kopfdrehkammer (C) definieren.

3. Vorrichtung nach Anspruch 2, die ferner eine Bremsscheibe (DB) umfasst, die dann, wenn die Nabe montiert ist, zwischen das Lager (B) und die Radscheibe (RD) eingefügt ist.

4. Vorrichtung nach einem der Ansprüche 2 oder 3, wobei die ringförmige Drehkammer (CH2) eine zweite Öffnung zu der Umgebung aufweist.

5. Vorrichtung nach Anspruch 4, wobei die zweite Öffnung einen radialen Kanal durch die Radscheibe und/oder die Bremsscheibe aufweist.

6. Vorrichtung nach Anspruch 4, wobei die Öffnung einen zweiten Kanal (CH2) aufweist, der durch die Spindel (F) ausgebildet ist und ein erstes Ende (CN3), das mit der Ringkammer (CH2) strömungstechnisch verbunden ist, und ein zweites Ende (CN4), das mit der Umgebung strömungstechnisch verbunden ist, besitzt.

7. Vorrichtung nach einem der vorhergehenden Ansprüche, wobei das Lager (B) vom Doppelreihentyp ist, d. h. ein Paar einander gegenüber befindlicher konischer Lager (B1, B2) besitzt.

8. System zum Steuern des Drucks eines Reifens eines Fahrzeugrades, das einer Radnabe nach einem der Ansprüche 1 bis 7 zugeordnet ist, wobei zwischen die erste Öffnung (CN1) und den Reifen ein mechanisches Ventil eingefügt ist, dessen Öffnen und Schließen durch Druckimpulse, die mittels der Druckluftquelle gesteuert werden, gesteuert werden kann.

9. Bodenfahrzeug, das mit wenigstens einer Radnabe nach einem der Ansprüche 1 bis 7 oder mit einem System zum Steuern des Drucks eines Reifens eines Fahrzeugrades nach Anspruch 8 ausgerüstet ist.

## Revendications

1. Moyeu de roue adapté pour contrôler une pression d'au moins un pneu respectif, comprenant
- une fusée (F) ayant une forme longitudinale, sur laquelle
- un palier (B) est claveté, ayant une partie fixe (BF) avec la fusée et une partie rotative, associée en rotation à la partie fixe (BF),
- un disque de roue (RD) adapté pour être raccordé à une roue de véhicule, le disque étant associé à ladite partie rotative (BB) dudit palier,
dans lequel ladite fusée (F) comprend une partie d'extrémité (S3),
le moyeu de roue étant **caractérisé en ce qu'**il comprend une partie centrale (RDC) dudit disque de roue (RD) adaptée pour être mise en prise sur ladite partie d'extrémité (S3) de la fusée (F) et un joint (G) intercalé de manière annulaire entre ladite partie d'extrémité (S3) et ladite partie centrale (RDC) afin de définir une chambre rotative de tête étanche (C1) et dans lequel ladite fusée (F) comprend un premier canal (CH1) ayant une première extrémité s'écoulant dans ladite chambre rotative de tête (C1) et une seconde extrémité (CN2) adaptée pour être raccordée de manière pneumatique à une source d'air comprimé et dans lequel ladite partie centrale (RDC) comprend une première ouverture (CN1) adaptée pour être raccordée par voie pneumatique à une valve dudit au moins un pneu.

2. Dispositif selon la revendication 1, dans lequel un écrou fileté (D) est vissé sur ladite fusée (F) pour bloquer ladite partie fixe (BF) dudit palier (B) sur la fusée (F), et dans lequel
- ledit disque de roue (RD),
- ledit écrou (D), et
- ledit palier (B),
définissent une chambre rotative annulaire (C2) adjacente à ladite chambre rotative de tête (C) à travers ledit joint (G).

3. Dispositif selon la revendication 2, comprenant en outre un disque de frein (DB) qui, lorsque le moyeu est assemblé, est intercalé entre le palier (B) et le disque de roue (RD).

4. Dispositif selon l'une des revendications 2 ou 3, dans lequel ladite chambre rotative annulaire (CH2) comprend une seconde ouverture vers l'environnement.

5. Dispositif selon la revendication 4, dans lequel ladite seconde ouverture comprend un canal radial à travers ledit disque de roue et/ou ledit disque de frein.

6. Dispositif selon la revendication 4, dans lequel ladite ouverture comprend un second canal (CH2), réalisé à travers ladite fusée (F) et ayant une première extrémité (CN3) s'écoulant dans ladite chambre annulaire (CH2) et une seconde extrémité (CN4) s'écoulant dans l'environnement.

7. Dispositif selon l'une des revendications précédentes, dans lequel ledit palier (B) est du type à double rangée, c'est-à-dire ayant une paire de paliers coniques opposés (B1, B2).

8. Système pour contrôler la pression d'un pneu d'une roue de véhicule associée à un moyeu de roue selon l'une quelconque des revendications 1 à 7, dans lequel, entre ladite première ouverture (CN1) et ledit pneu, une valve mécanique est intercalée, dont l'ouverture et la fermeture peuvent être contrôlées au moyen d'impulsions de pression contrôlées au moyen de ladite source d'air comprimé.

9. Véhicule terrestre équipé d'au moins d'un moyeu de roue selon l'une quelconque des revendications 1 à 7 ou avec un système pour contrôler la pression d'un pneu d'une roue de véhicule selon la revendication 8.
